# NEUE EUROPÄISCHE PATENTSCHRIFT

(11) **EP 1 632 511 B2**
(45) Veröffentlichungstag und Bekanntmachung des Hinweises auf die Entscheidung über den Einspruch: **14.08.2019**
(45) Hinweis auf die Patenterteilung: 06.07.2016
(21) Anmeldenummer: 05018225.2
(22) Anmeldetag: 23.08.2005
(51) Int. Cl.: C08G 18/42, C08G 18/09, C08G 18/76

(54) **AUF ALIPHATISCHEN POLYESTERPOLYOLEN BASIERENDE PUR-/PIR-HARTSCHAUMSTOFFE**
PUR/PIR rigid foams based on aliphatic polyester polyols
Mousses rigides de PUR/PIR obtenues a partir de polyester polyols aliphatiques

(30) Priorität: 02.09.2004 DE 102004042525
(43) Veröffentlichungstag der Anmeldung: 08.03.2006
(73) Patentinhaber: Covestro Deutschland AG, 51373 Leverkusen (DE)
(72) Erfinder: Kusan-Bindels, Jacqueline, Dr., 52074 Aachen (DE); Künzel, Uwe, 51377 Leverkusen (DE); Nefzger, Hartmut, 50259 Pulheim (DE); Heinemann, Torsten, Dr., 43080 Tarragona (ES)
(74) Vertreter: Levpat

(56) Entgegenhaltungen:
- EP-A- 0 032 380
- EP-A- 0 213 475
- EP-A- 0 680 981
- EP-A1- 0 743 334
- WO-A1-97/48747
- DE-A- 19 742 011
- DE-A1- 3 020 860
- DE-A1- 3 642 666
- FR-A- 2 451 383
- GB-A- 1 592 534
- US-A- 4 277 571
- US-A- 4 400 477
- US-A- 4 576 974
- US-A- 4 897 431

## Beschreibung

Die vorliegende Erfindung betrifft auf aliphatischen Polyesterpolyolen basierende PUR-/PIR-Hartschaumstoffe, ein Verfahren zur Herstellung dieser PUR-/PIR-Hartschaumstoffe durch Versprühen und Laminate enthaltend diese PUR-/PIR-Hartschaumstoffe.

PUR-/PIR-Hartschaumstoffe werden in der heutigen Zeit vorwiegend auf Basis aromatischer Polyesterpolyole hergestellt, da diese die Flammwidrigkeit der PUR-/PIR-Hartschaumstoffe und die Wärmeleitfähigkeit positiv beeinflussen. Bei der Verstellung der aromatischen Polyesterpolyole finden als Rohstoffe vor allem Phthalsäure/-anhydrid, Terephthalsäure und Isophthalsäure Verwendung. Neben den aromatischen Polyesterpolyolen werden gelegentlich noch Polyethepolyole und teilweise auch aliphatische Polyesterpolyole zugesetzt, um das Löslichkeitsverhalten von Pentanen gegenüber den aromatischen Polyesterpolyolen zu verbessern oder die Sprödigkeit der isocyanurathaltigen PUR-/PIR-Hartschaumstoffe zu reduzieren.

So offenbart EP-A 1219653 PUR-/PIR-Hartschaumstoffe mit verbesserter Flammwidrigkeit und niedriger Wärmeleitfähigkeit auf Basis aromatischer Polyesterpolyole. Daneben wird auch der Einsatz aliphatischer, cycloaliphatischer oder heterocyclischer Polyesterpolyole vorgeschlagen.

WO 97/48747 lehrt, dass sich PUR-/PIR-Hartschaumstoffe mit verringerter Sprödigkeit und verbesserter Oberflächenhaftung herstellen lassen, wenn die Polyolkomponente sowohl aromatische als auch aliphatische Polyesterpolyole enthält.

Des Weiteren offenbart WO-A2 2004/060950 PUR-/PIR-Hartschaumstoffe für Sprühschaum-anwendungen mit verbesserter Flammwidrigkeit und verbessertem Lambda-Alterungsverhalten auf Basis aromatischer Polyesterpolyole. Daneben wird auch der Einsatz aliphatischer oder heterocyclischer Polyesterpolyole vorgeschlagen.

WO-A2 2004/060950 lehrt, dass sich PUR-/PIR-Hartschaumstoffe mit hoher thermischer Resistenz und verbesserter Flammwidrigkeit herstellen lassen, wenn die Polyolkomponente bevorzugt hochfunktionelle aromatische Polyesterpolyole enthält.

US 6,495,722 sowie US-A1 2002/0040122 beschreiben für die Herstellung von rein Wasser getriebenen Systemen die Verwendung von auf Mannichbase basierten Polyolen, da nur durch die Verwendung derartiger Polyole eine gute Flammwidrigkeit und Dimensionsstabilität ermöglicht werden kann. Ein großer Nachteil derartiger Mannichbase basierten Polyole ist die hohe Viskosität und der damit verbundenen Verarbeitbarkeit als Spuhschaumsystem. Aufgrund der hohen Viskosität entstehen leicht Vermischungsstörungen und somit Schäume mit schlechten mechanischphysikalischen Eigenschaften.

Es wurde nun gefunden dass sich bei Verwendung spezieller aliphatischer Polyesterpolyole auch ohne Zusatz aromatischer Polyesterpolyole PUR-/PIR-Hartschaumstoffe mit verbesserter Flammwidrigkeit, niedriger Wärmeleitfähigkeit, verringerter Sprödigkeit und verbesserter Oberflächenhaftung und Oberflächenqualität sowie für die Anwendung im Sprühverfahren niedrige Viskositäten einstellen lassen, sowie Hartschaumstoffe mit sehr guter Dimensionsstabilität herstellen lassen. Dies ist umso überraschender, da bislang davon ausgegangen wurde, dass zur Erzielung hoher Flammwidrigkeit der Einsatz aromatischer Polyesterpolyole unverzichtbar ist.

Gegenstand der Erfindung sind PUR/PIR-Hartschaumstoffe, erhältlich durch Umsetzung einer organischen Polyisocyanatkomponente mit einer Verbindungen mit gegenüber Isocyanatgruppen reaktive Wasserstoffatome enthaltenden Polyolkomponente bei einem Index (das molare Verhältnis der Isocyanatgruppen zu den gegenüber Isocyanatgruppen reaktiven Wasserstoffatomen multipliziert mit 100) von 100 bis 400, besonders bevorzugt 180 bis 400, z.B. für die Herstellung von PUR-/PIR-Hartschaumstoffen für Laminate, in Gegenwart geeigneter Hilfs- und Zusatzstoffe sowie Treibmittel und Co-Treibmittel, wobei die Polyolkomponente mindestens ein aliphatisches Polyesterpolyol enthält, das neben von Adipinsäure abgeleiteten Baueinheiten auch solche Baueinheiten enthält, die von Glutarsäure, Bernsteinsäure oder Sebacinsäure abgeleitet sind.

Für die Verstellung von PUR-/PIR-Hartschaumstoffen werden als organische Polyisocyanatkomponente Mischungen aus Isomeren des Diphenylmethandiisocyanat (M DI) und dessen Oligomeren eingesetzt. Solche Mischungen werden allgemein als "polymeres MDI" (pMDI) bezeichnet. Darüber hinaus ist die Verwendung von geeigneten NCO-Prepolymeren, hergestellt aus der Umsetzung von polymerem MDI mit aliphatischen oder aromatischen Polyetherpolyolen oder Polyesterpolyolen, beispielsweise 1 bis 4 Hydroxylgruppen aufweisenden Polyetherpolyolen oder Polyesterpolyolen mit einem zahlenmittleren Molekulargewicht von 60 bis 4000.

Die Polyolkomponente enthält mindestens ein aliphatisches Polyesterpolyol, das neben von Adipinsäure abgeleiteten Baueinheiten auch solche Baueinheiten enthält, die von Glutarsäure, Bernsteinsäure und/oder Sebacinsäure, bevorzugt Glutarsäure und/oder Bernsteinsäure, abgeleitet sind. Das aliphatische Polyesterpolyol weist keine aromatischen Einheiten auf. Ein besonders bevorzugtes aliphatisches Polyesterpolyol ist erhältlich durch Umsetzung eines Gemischs, welches 15 bis 45 Gew.-% Adipinsäure, 40 bis 55 Gew.-% Glutarsäure sowie 10 bis 35 Gew.-% Bernsteinsäure enthält. Die Bernsteinsäure und die Glutarsäure können hierin zum Teil als Anhydrid vorliegen.

Als Alkoholkomponente zur Herstellung der aliphatischen Polyesterpolyole kommen Glykole wie Ethylenglykol, Diethylenglykol, Triethylenglykol, Tetraethylenglykol, 1,2-Propandiol, 1,3-Propandiol, 1,4-Butandiol, 3-Methyl-1,5-pentandiol, 1,5-Pentandiol, 1,6-Hexandiol, 1,10-Decandiol, Glycerin, Trimethylolpropan, bzw. Mischungen daraus zum Einsatz. Bevorzugt werden Monoethylenglykol und Diethylenglykol verwendet, besonders bevorzugt Monoethylenglykol.

Vorzugsweise weisen die aliphatischen Polyesterpolyole eine Funktionalität von 1,8 bis 6,5 insbesondere von 1,8 bis 3,0 und eine OH-Zahl von 100 bis 300, sowie eine Säurezahl von 0,5 bis 5,0 mg KOH/g auf.

Neben den aliphatischen Polyesterpolyolen kann die Polyolkomponente weitere Verbindungen mit gegenüber Isocyanatgruppen reaktiven Wasserstoffatomen enthalten, die keine Polyesterpolyole sind, beispielsweise Polyetherpolyole oder niedermolekulare Kettenverlängerer oder Vernetzer. Diese Zusätze können eine Verbesserung der Fließfähigkeit des Reaktionsgemisches und der Emulgierfähigkeit der treibmittelhaltigen Formulierung bewirken. Für die Verstellung der Laminate können diese Zusätze, die oben genannten Eigenschaften auch auf kontinuierlich produzierenden Anlagen, auf welchen Elemente mit flexiblen oder starren Deckschichten hergestellt werden, bewirken. Bevorzugt werden hierbei Verbindungen eingesetzt, welche eine Funktionalität von 1,8 bis 4,5, eine OH-Zahl von 20 bis 460 mg KOH/g für die Laminatherstellung und 20 bis 800 für das Sprühverfahren und gegebenenfalls primäre OH-Gruppen aufweise. Bevorzugte Polyetherpolyole weisen eine Funktionalität von 2,0 bis 3,0 für die Laminate und 2,0 bis 4,5 für das Sprühverfahren, eine OH-Zahl von 20 bis 56 für die Laminate und 400 bis 800 für das Sprühverfahren, und mehr als 80 mol%, insbesondere mehr als 90 mol%, primäre OH-Gruppen für Laminate bzw. mehr als 90 mol% sekundäre OH-Gruppen für das Sprühverfahren.

Eine bevorzugte Polyolkomponente für die Laminate enthält 65 bis 100 Gew.-%, insbesondere 80 bis 100 Gew.-%, aliphatisches Polyesterpolyol, 0 bis 25 Gew.-%, insbesondere 5 bis 15 Gew.-%, Polyetherpolyol mit einer Funktionalität von 2,0 bis 4,5 und einer OH-Zahl von 20 bis 460, bevorzugt 20 bis 56 mg KOH/g und 0 bis 10 Gew.-%, insbesondere 0 bis 5 Gew.-%, niedermolekulare Kettenverlängerer oder Vernetzer mit einer Funktionalität von 3,0 bis 4,0 und einer OH-Zahl von 900 bis 2000. Die Angaben in Gew.-% beziehen sich jeweils auf die Gesamtmenge an Verbindungen mit gegenüber Isocyanatgruppen reaktiven Wasserstoffatomen in der Polyolkomponente.

Eine bevorzugte Polyolkomponente für das Sprühverfahren enthält 5 bis 100 Gew.-%, insbesondere 10 bis 70 Gew.-%, aliphatisches Polyesterpolyol, 0 bis 95 Gew.-%, insbesondere 30 bis 90 Gew.-%, Polyetherpolyol mit einer Funktionalität von 2,0 bis 4,5 und einer OH-Zahl von 20 bis 800, bevorzugt 400 bis 800 mg KOH/g. Die Angaben in Gew.-% beziehen sich jeweils auf die Gesamtmenge an Verbindungen mit gegenüber Isocyanatgruppen reaktiven Wasserstoffatomen in der Polyolkomponente.

Der Polyolkomponente werden in der Regel Flammschutzmittel zugesetzt, bevorzugt in einer Menge von 10 bis 25 Gew.-% für die Laminate und 5 bis 50 Gew.-% für das Sprühverfahren, bezogen auf die Gesamtmenge an Verbindungen mit gegenüber Isocyanatgruppen reaktiven Wasserstoffatomen in der Polyolkomponente. Derartige Flammschutzmittel sind dem Fachmann im Prinzip bekannt und beispielsweise in "Kunststoffhandbuch", Band 7 "Polyurethane", Kapitel 6.1 beschrieben. Dies können beispielsweise brom- und chlorhaltige Polyole oder Phosphorverbindungen wie die Ester der Orthophosphorsäure und der Metaphosphorsäure, die ebenfalls Halogen enthalten können, sein. Bevorzugt werden bei Raumtemperatur flüssige Flammschutzmittel gewählt.

Eingesetzt wird soviel Treibmittel und Co-Treibmittel, wie zur Erzielung einer dimensionsstabilen Schaummatrix und gewünschten Rohdichte nötig ist. In der Regel sind dies für- die Laminate zwischen 0,5 und 4 Gew.-% an Co-Treibmittel und zwischen 1,0 und 30,0 Gew.-% an Treibmittel, jeweils bezogen auf 100 Gew.-% Polyolkomponente. Das Mengenverhältnis von Co-Treibmittel zu Treibmittel kann je nach Bedarf von 1:7 bis 1:35 betragen. Für das Sprühverfahren, ist dies zwischen 1,0 bis 15,0 Gew.-% an Treibmittel und zwischen 1,5 und 4,0 Gew.-% an Co-Treibmittel, jeweils bezogen auf 100 Gew.-% Polyolkomponente. Das Mengenverhältnis von Treibmittel zu Co-Treibmittel kann je nach Bedarf von 20:1 bis 0:100 betragen.

Als Treibmittel werden die Isomeren des Pentans, oder Fluorkohlenwasserstoffe, z.B. HFC 245fa (1,1,1,3,3-Pentafluorpropan), HFC 365mfc (1,1,1,3,3-Pentafluorbutan) oder deren Mischungen mit HFC 227ea (Heptafluorpropan), verwendet. Es können auch verschiedene Treibmittelklassen kombiniert werden. So lassen sich z.B. mit Mischungen von n- oder c-Pentan mit HFC 245fa im Verhältnis 75:25 (n-/c-Pentan:HFC 245fa) Wärmeleitfähigkeiten, gemessen bei 10°C, von weniger als 20 mW/mK erzielen.

Als Co-Treibmittelwird Wasser eingesetzt, in einer Menge von 0,5 bis 4 Gew.-% für die Laminate und in Mengen von 1,5 bis 4 Gew.-% für das Sprühverfahren, bezogen auf die Gesamtmenge an Verbindungen mit gegenüber Isocyanatgruppen reaktiven Wasserstoffatomen in der Polyolkomponente. Für das Sprühverfahren kann auf die Verwendung von klassischen Treibmitteln gänzlich verzichtet werden und das Zellgas allein über das Co-Treibmittel generiert werden.

Der Polyolkomponente werden in der Polyurethanchemie übliche Katalysatoren zugesetzt. Die zur Herstellung eines PUR-/PIR-Hartschaumstoffes nötigen aminischen Katalysatoren sowie die als Trimerisationskatalysatoren eingesetzten Salze werden in solcher Menge eingesetzt, dass z.B. auf kontinuierlich produzierenden Anlagen Elemente mit flexiblen Deckschichten mit Geschwindigkeiten bis zu 60 m/min je nach Elementstärke produziert werden können als auch für Isolationen an Rohren, Wänden, Dächern sowie Tanks und in Kühlschränken im Sprühschaumverfahren mit hinreichender Aushärtezeit hergestellt werden können.

Beispiele für derartige Katalysatoren sind: Triethylendiamin, N,N-Dimethylcyclohexylamin, Tetramethylendiamin, 1-Methyl-4-dimethylaminoethylpiperazin, Triethylamin, Tributylamin, Dimethylbenzylamin, N,N',N"-Tris-(dimethylaminopropyl)hexahydrotriaziti, Dimethylaminopropylformamid, N,N,N',N'-Tetramethylethylendiamin, N,N,N',N'-Tetramethylbutandiamin, Tetramethylhexandiamin, Pentamethyldiethylentriamin, Tetramethyldiaminoethylether, Dimethylpiperazin, 1,2-Dimethylimidazol, 1-Azabicyclo[3.3.0]octan, Bis-(dimethylaminopropyl)-harnstoff, N-Methylmorpholin, N-Ethylmorpholin, N-Cyclohexylmorpholin, 2,3-Dimethyl-3,4,5,6-tetrahydropyrimidin, Triethanolamin, Diethanolamin, Triisopropanolamin, N-Methyldiethanolamin, N-Ethyldiethanolamin, Dimethylethanolamin, Zinn-(II)-acetat, Zinn-(II)-octoat, Zinn-(II)-ethylhexoat, Zinn-(II)-laurat, Dibutylzinndiacetat, Dibutylzinndilaurat, Dibutylzinnmaleat, Dioctylzinndiacetat, Tris-(N,N-dimethylaminopropyl)-s-hexahydrotriazin, Tetramethylammoniumhydroxid, Natriumacetat, Natriumoctoat, Kaliumacetat, Kaliumoctoat, Natriumhydroxid oder Gemische dieser Katalysatoren.

Als Schaumstabilisatoren, die ebenfalls der Polyolkomponente zugesetzt werden, kommen vor allem Polyethersiloxane in Frage. Diese Verbindungen sind im Allgemeinen so aufgebaut, dass ein Copolymerisat aus Ethylenoxid und Propylenoxid mit einem Polydimethylsiloxanrest verbunden ist.

Zur Beeinflussung des Lambdaalterungsverhaltens können der Polyolkomponente feste Additive wie z.B. Nanoteilchen zugesetzt werden. Weitere Beispiele von gegebenenfalls in der erfindungsgemäßen Polyolformulierung mitzuverwendenden festen Additiven sind literaturbekannt.

Die Herstellung der erfindungsgemäßen PUR-/PIR-Hartschaumstoffe erfolgt nach dem dem Fachmann bekannten Einstufenverfahren, bei dem die Reaktionskomponenten kontinuierlich oder diskontinuierlich miteinander zur Reaktion gebracht werden und dann anschließend entweder manuell oder durch Zuhilfenahme maschineller Einrichtungen im Hochdruck- oder Niederdruckverfahren nach Austrag auf ein Transportband oder in bzw. auf geeignete Formen zur Aushärtung gebracht werden. Beispiele sind in US-A 2 764 565, in G. Oertel (Hrsg.) "Kunststoff Handbuch", Band VII, Carl Hanser Verlag, 3. Auflage, München 1993, S. 267 ff., sowie in K. Uhlig (Hrsg.) "Polyurethan Taschenbuch", Carl Hanser Verlag, 2. Auflage, Wien 2001, S. 83-102 beschrieben.

Die erfindungsgemäßen PUR-/PIR-Hartschäume können vielseitig als Isoliermaterial eingesetzt werden. Beispiele aus dem Bauwesen sind Wandisolationen, Rohrschalen bzw. Rohrhalbschalen, Dachisolierungen, Wandelemente und Fußbodenplatten.

Gegenstand der Erfindung sind auch die erfindungsgemäßen PUR-/PIR-Hartschäume enthaltende Laminate. Diese weisen einen Kern aus erfindungsgemäßem PUR-/PIR-Hartschaum und mit diesem fest verbundene Deckschichten auf. Die Deckschichten können flexibel oder starr sein. Beispiele sind Papierdeckschichten, Vliesdeckschichten, Metalldeckschichten (z.B. Stahl, Aluminium) Holz- und Verbunddeckschichten. Die Herstellung derartiger Laminate ist dem Fachmann im Prinzip bekannt und beispielsweise in G. Oertel (Hrsg.) "Kunststoff-Handbuch", Band VII, Carl Hanser Verlag, 3. Auflage, München 1993, S. 272-277 beschrieben. Sie erfolgt bevorzugt nach dem Doppeltransportbandverfahren, wobei die erfindungsgemäßen Laminate problemlos bei Bandgeschwindigkeiten bis zu 60 m/min herstellbar sind.

Ein besonderer Vorteil der erfindungsgemäßen Laminate ist die verbesserte Haftung der Deckschichten. Bei Laminaten, die unter Verwendung aromatischer Polyesterpolyole hergestellt werden, wird nach etwa 15 Minuten ein Minimum der Haftung zwischen Schaum und Deckschichten beobachtet. Dieser Effekt tritt bei den erfindungsgemäßen Laminaten bei Doppeltransportbandverfahren nicht auf. Nach Austritt der Laminate aus der Anlage bleiben die Deckschichten dauerhaft am Schaum haften, so dass die erfindungsgemäßen Laminate ohne Probleme auch in kalten Wintermonaten direkt zur Abstapelung und/oder Weiterverarbeitung gebracht werden können.

Ein weiterer besonderer Vorteil der erfindungsgemäßen Sprühschäume ist das verbesserte Brandverhalten im Vergleich zu Systemen basierend auf aromatischen Polyesterpolyolen, sowie deren verbesserte Dimensionsstabilität bei rein CO₂ getriebenen Schäumen in Rohdichten von 22 bis 40 kg/m3. Des Weiteren ist die niedrige Viskosität der hier vorliegenden Mischung basierend auf das aliphatische Polyesterpolyol sowie deren Reinkomponente besonders hervorzuheben.

### Beispiele

### Polyolkomponente 1 (Vergleich):

Aus folgenden Komponenten wurde eine Formulierung hergestellt:
95 Gew.-% eines aromatischen Polyesterpolyols mit OHZ 210 mg KOH/g und einer Viskosität von 8000 mPas bei 25°C (Desmophen^{®} 23HS81, Bayer MaterialScience AG),
5 Gew.-% Triethanolamin.

### Polyolkomponente 2 (Vergleich):

100 Gew.-% eines aromatischen Polyesterpolyols mit OHZ 235 mg KOH/g und einer Viskosität von 3600 mPas bei 25°C (Terate^{®} 2541, KoSa GmbH & Co. KG, D-65795 Hattersheim am Main).

### Polyolkomponente 3 (erfindungsgemäß):

Aus folgenden Komponenten wurde eine Formulierung hergestellt:
95 Gew.-% eines aliphatischen Polyesterpolyols mit OHZ 214 ing KOH/g und einer Viskosität von 2000 mPas bei 25°C, hergestellt durch Umsetzung eines Gemischs von Adipinsäure, Bernsteinsäure und Glutarsäure mit Ethylenglykol,
5 Gew.-% Triethanolamin.

### Polyolkomponente 4 (erfindungsgemäß):

Aus folgenden Komponenten wurde eine Formulierung hergestellt:
86 Gew.-% eines aliphatischen Polyesterpolyols mit OHZ 214 mg KOH/g und einer Viskosität von 2000 mPas bei 25°C, hergestellt durch Umsetzung eines Gemischs von Adipinsäure, Bernsteinsäure und Glutarsäure mit Ethylenglykol,
14 Gew.-% eines aliphatischen Polyethers mit OHZ 28, 90 mol% primären OH-Gruppen und einer Viskosität 860 mPas bei 25°C (Desmophen^{®} L 2830, Bayer MatrialScience AG).

### Polyolkomponente 5 (erfindungsgemäß):

Aus folgenden Komponenten wurde eine Formulierung hergestellt:
86 Gew.% eines aliphatischen Polyesterpolyols mit OHZ 214 mg KOH/g und einer Viskosität von 2000 mPas bei 25°C, hergestellt durch Umsetzung eines Gemischs von Adipinsäure, Bernsteinsäure und Glutarsäure mit Ethylenglykol,
14 Gew.-% eines aromatischen Polyethers mit OHZ 460 und einer Viskosität von 8000 mPas bei 25°C (Desmophen^{®} VP.PU 1907, Bayer MaterialScience AG).

Auf Basis der Polyolkomponenten wurden im Labor PUR/PIR-Hartschaumstoffe hergestellt. Dazu wurden der jeweiligen Polyolkomponente Flammschutzmittel, ein Schaumstabilisator auf Polyethersiloxan-Basis, Katalysatoren, Wasser und n-Pentan als Treibmittel zugesetzt und die so erhaltene Mischung wurde mit Polyisocyanat (ein Gemisch von MDI-Isomeren und deren höheren Homologen mit einem NCO-Gehalt von 31 Gew.-%, Desmodur^{®} 44V40L, Bayer MaterialScience AG) vermischt und das Gemisch in eine Papierform (30x30x10 cm³) gegossen und darin ausreagiert. Die genauen Rezepturen der einzelnen Versuche sind in Tabelle 1 wiedergegeben, ebenfalls die Ergebnisse der physikalischen Messungen an den erhaltenen Proben.

Die Haftung wurde an Papierdeckschichten manuell in bestimmten Zeitintervallen am frischen erfindungsgemäß hergestellten isocyanurathaltigen PUR-/PIR-Hartschaumstoff untersucht. Die Ergebnisse wurden qualitativ nach Noten bewertet, wobei "gut" bedeutet, dass das Papier nur mühsam abgezupft werden kann, "befriedigend" bedeutet, dass das Papier mit geringem Kraftaufwand abgezogen werden kann, "ausreichend" bedeutet, dass das Papier leicht abgezogen werden kann, "mangelhaft" bedeutet, dass das Papier nur teilweise am Schaum haftet und "ungenügend" bedeutet, dass das Papier keine Haftung zum Schaum aufweist. Die Sprödigkeit wurde qualitativ durch Eindrücken der Schäume mit dem Daumen im Kern- und Randbereich ermittelt. Die Rohdichte wurde an einem 10x10x10 cm³ Würfel durch Ermittlung des Gewichtes errechnet. Die Lambdawerte wurden mit Hilfe der Wärmeflussmethode nach DIN 52616 bei 10°C Mittentemperatur bestimmt (Fox-Gerät). Die Brandeigenschaften wurden gemäß DIN 4102 bestimmt.

**Tabelle 1:**

| | Vergleich 1 | Vergleich 2 | Bsp. 1 | Bsp.2 | Bsp. 3 |
|---|---|---|---|---|---|
| Polyol 1 [Gew.-Tle.] | 100 | | | | |
| Polyol 2 [Gew.-Tle.] | | 100 | | | |
| Polyol 3 [Gew.-Tle.] | | | 100 | | |
| Polyol 4 [Gew.-Tle.] | | | | 100 | |
| Polyol 5 [Gew.-Tle.] | | | | | 100 |
| TCPP [Gew.-Tle.] | 18,0 | 18,0 | 18,0 | 18,0 | 18,0 |
| Stabilisator [Gew.-Tle.] | 2,0 | 2,0 | 2,0 | 2,0 | 2,0 |
| DMCHA [Gew.-Tle.] | 1,0 | 1,2 | 1,0 | 0,8 | 0,8 |
| K-Acetat in DEG [Gew.-Tle.] | 4,6 | 4,8 | 3,6 | 3,0 | 3,0 |
| Wasser [Gew.-Tle.] | 1,7 | 2,3 | 1,3 | 1,7 | 1,8 |
| n-Pentan [Gew.-Tle.] | 17,1 | 17,9 | 16,9 | 15,3 | 16,8 |
| Isocyanat [Gew.-Tle.] | 245 | 306 | 240 | 235 | 235 |
| | | | | | |
| Index | 255 | 298 | 273 | 300 | 278 |
| | | | | | |
| Ausbauchung Mitte [mm] | 106 | 107 | 102 | 101 | 102 |
| Sprödigkeit | stark | stark | keine | keine | keine |
| Haftung nach 5 min | mangelhaft | ausreichend | gut | gut | gut |
| Haftung nach 15 min | ungenügend | ungenügend | gut | gut | gut |
| Haftung nach 24 h | gut | gut | gut | gut | gut |
| Kernrohdichte [kg/m³] | 32,2 | 33,1 | 33,5 | 30,6 | 30,0 |
| Lambda bei 10°C [mW/mK] | 22,0 | 22,7 | 22,5 | 21,9 | 22,2 |
| Flammhöhe [mm] | 130 | 135 | 115 | 118 | 120 |
| Brandklasse | B2 | B2 | B2 | B2 | B2 |
| TCPP: Tris(β-chlorisopropyl)phosphat | | | | | |
| DMCHA: Dimethylcyclohexylamin | | | | | |
| DEG: Diethylenglykol | | | | | |

Aus den Ergebnissen in Tabelle 1 wird deutlich, dass sowohl die Sprödigkeit als auch das Haftungsminimum verbessert werden können. Überraschend wurde festgestellt, dass die Ausbauchung des 10 cm dicken Schaums durch Verwendung von aliphatischen Polyesterpolyolen stark minimiert wird. Weiterhin wird bei Verwendung des erfindungsgemäßen rein aliphatischen Polyesterpolyols sogar ein verbessertes Brandverhalten beobachtet, was nicht zu erwarten war.

### Polyolkomponente 6 ("Vergleich):

Aus folgenden Komponenten wurde eine Formulierung hergestellt:
47 Gew.-% eines aromatischen Polyetherpolyols mit OHZ 460 mg KOH/g und einer Viskosität von 8000 mPas bei 25°C (Desmophen^{®} 1907, Bayer MaterialScience AG),
16 Gew.-% eines aromatischen Polyesterpolyols mit OHZ 240 und einer Viskosität von 12500 mPas bei 75°C (Polyester S240P, Bayer MaterialScience),
3 Gew.-% Wasser,
30 Gew.-% Trischlorisopropylphosphat (Levagard PP^{®}, Lanxess AG),
0,3 Gew.-% Dibutylzinndilaurat (Air Products),
0,5 Gew.-% Pentamethyldiethylentriamin (Air Products),
2,2 Gew.-% Dimethylcyclohexylamin (Rheinchemie),
1 Gew.-% Stabilisator (Tegostab^{®} B8450, Goldschmidt AG)

### Polyolkomponente 7 (erfindungsgemäß):

Aus folgenden Komponenten wurde eine Formulierung hergestellt:
47 Gew.-% eines aromatischen Polyetherpolyols mit OHZ 460 mg KOH/g und einer Viskosität von 8000 mPas bei 25°C (Desmophen^{®} 1907, Bayer MaterialScience AG),
16 Gew.-% eines aliphatischen Polyesterpolyols mit OHZ 214 mg KOH/g und einer Viskosität von 2000 mPas bei 25°C, hergestellt durch Umsetzung eines Gemischs von Adipinsäure, Bernsteinsäure und Glutarsäure mit Ethylenglykol,
3 Gew.-% Wasser,
30 Gew.-% Trischlorisopropylphosphat (Levagard PP^{®}, Lanxess AG),

### Polyolkomponente 7 (Vergleich):

Aus folgenden Komponenten wurde eine Formulierung hergestellt:
47 Gew.-% eines aromatischen Polyetherpolyols mit OHZ 460 mg KOH/g und einer Viskosität von 8000 mPas bei 25°C (Desmophen^{®} 1907, Bayer MaterialScience AG),
16 Gew.-% eines aliphatischen Polyesterpolyols mit OHZ 214 mg KOH/g und einer Viskosität von 2000 mPas bei 25°C, hergestellt durch Umsetzung eines Gemischs von Adipinsäure, Bernsteinsäure und Glutarsäure mit Ethylenglylcol,
3 Gew.-% Wasser,
30 Gew.-% Trischlorisopropylphosphat (Levagard PP^{®}, Lanxess AG),
0,3 Gew.-% Dibutylzinndilaurat (Air Products),
0,5 Gew.-% Pentamethyldiethylentriamin (Air Products),
2,2 Gew.-% Dimethylcyclobexylamin (Rheinchemie),
1 Gew.-% Stabilisator (Tegostab^{®} B8450, Goldschmidt AG)

**Tabelle 2:**

| | Vergleich | Vergleich |
|---|---|---|
| Polyol 6 [Gew.-Tle.] | 50 | |
| Polyol 7 [Gew.-Tle.] | | 50 |
| Isocyanat [Gew.-Tle.] | 50 | 50 |
| Index | 125 | 125 |
| | | |
| Rührzeit [s] | 2 | 2 |
| Startzeit [s] | 2 | 1,8 |
| Abbindezeit [s] | 7,5 | 7,1 |
| Freie Rohdichte [kg/m³] | 40,4 | 39,9 |
| Brandverhalten entsprechend EN ISO 11925-2 | Anforderung Euroklasse E wurde nicht erfüllt | Euroklasse E |

0,6 Gew.-% Pentamethyldiethylentriamin (Air Products),
2,2 Gew.-% Dimethylcyclohexylamin (Rheinchemie),
1 Gew.-% Stabilisator (L 6900, GE-OSi)

### Polyolkomponente 9 (erfindungsgemäß):

Aus folgenden Komponenten wurde eine Formulierung hergestellt:
13,1 Gew.-% einer Mannichbase auf Basis von Nonylphenol mit OHZ 740 mg KOH/g und einer Viskosität von 12000 mPas bei 25°C (Desmophen^{®} 5118-2, Bayer MaterialScience AG),
52,3 Gew.-% eines aliphatischen Polyesterpolyols mit OHZ 214 mg KOH/g und einer Viskosität von 2000 mPas bei 25°C, hergestellt durch Umsetzung eines Gemischs von Adipinsäure, Bernsteinsäure und Glutarsäure mit Ethylenglykol,
2,8 Gew.-% Wasser,
17,7 Gew.-% Trischlorisopropylphosphat (Levagard PP^{®}, Lanxess AG),
0,3 Gew.-% Dibutylzinndilaurat (Air Products),
0,6 Gew.-% Pentamethyldiethylentriamin (Air Products),
2,2 Gew.-% Dimethylcyclohexylamin (Rheinchemie),
1 Gew.-% Stabilisator (L 6900, GE-OSi)

### Polyolkomponente 10 (Vergleich):

Aus folgenden Komponenten wurde eine Formulierung hergestellt:
13,1 Gew.-% einer Mannichbase auf Basis von Nonylphenol mit OHZ 740 mg KOH/g und einer Viskosität von 12000 mPas bei 25°C (Desmophen^{®} 5118-2, Bayer MaterialScience AG),
52,3 Gew.-% eines aromatischen Polyesterpolyols mit OHZ 240 und einer Viskosität von 12500 mPas bei 75°C (Polyester S240P, Bayer MaterialScience),
2,8 Gew.-% Wasser,
17,7 Gew.-% Trischlorisopropylphosphat (Levagard PP^{®}, Lanxess AG),
0,3 Gew.-% Dibutylzinndilaurat (Air Products),
0,6 Gew.-% Pentamethyldiethylentriamin (Air Products),
2,2 Gew.-% Dimethylcyclohexylamin (Rheinchemie),
1 Gew.-% Stabilisator (L 6900, GE-OSi)

### Polyolkomponente 11 (erfindungsgemäß):

Aus folgenden Komponenten wurde eine Formulierung hergestellt:
13,1 Gew.-% einer Mannichbase auf Basis von Nonylphenol mit OHZ 740 mg KOH/g und einer Viskosität von 12000 mPas bei 25°C (Desmophen^{®} 5118-2, Bayer MaterialScience AG),
52,3 Gew.-% eines aliphatischen Polyesterpolyols mit OHZ 214 mg KOH/g und einer Viskosität von 2000 mPas bei 25°C, hergestellt durch Umsetzung eines Gemischs von Adipinsäure, Bernsteinsäure und Glutarsäure mit Ethylenglykol,
2,8 Gew.-% Wasser,
17,7 Gew.-% Trischlorisopropylphosphat (Levagard PP^{®}, Lanxess AG),
0,3 Gew.-% Dibutylzinndilaurat (Air Products),
0,6 Gew.-% Pentamethyldiethylentriamin (Air Products),
2,2 Gew.-% Dimethylcyclohexylamin (Rheinchemie),
1 Gew.-% Stabilisator (L 6900, GE-OSi)

**Tabelle 3:**

| | Vergleich | Erfindungsgemäß | Vergleich | Erfindungsgemäß |
|---|---|---|---|---|
| Polyol 8 [Gew.-Tle.] | 45 | | | |
| Polyol 9 [Gew.-Tle.] | | 45 | | |
| Polyol 10 [Gew.-Tle.] | | | 45 | |
| Polyol 11 [Gew.-Tle.] | | | | 45 |
| R 245fa [Gew.-Tle.] | 5 | 5 | | |
| R 365mfc/227ea [Gew.-Tle.] | | | 5 | 5 |
| Isocyanat [Gew.-Tle.] | 50 | 50 | 50 | 50 |
| Index | 105 - 110 | 105-110 | 105- 110 | 105 - 110 |
| Rührzeit [s] | 2 | 2 | 2 | 2 |
| Startzeit [s] | 2 | 2 | 2,1 | 2,2 |
| Abbindezeit [s] | 5,9 | 5,7 | 5,8 | 5,7 |
| Freie Rohdichte [kg/m³] | 30,9 | 31,0 | 31,9 | 31,7 |
| Viskosität der Formulierung [mPas] bei 25°C | 780 | 276 | 760 | 279 |

Auf Basis der Formulierungen wurden im Labor PUR/PIR-Hartschaumstoffe hergestellt. Dazu wurden die jeweiligen Formulierungen mit Polyisocyanat (ein Gemisch von MDI-Isomeren und deren höheren Homologen mit einem NCO-Gehalt von 30,5 Gew.-%, Desmodur^{®} 44V20L, Bayer MaterialScience AG) vermischt und das Gemisch in eine Papierform (30x30x10 cm³) gegossen und darin ausreagiert. Die genauen Rezepturen der einzelnen Versuche sind in Tabelle 2 wiedergegeben, ebenfalls die Ergebnisse der physikalischen Messungen an den erhaltenen Proben.

Die Rohdichte wurde an einem 10x10x10 cm³ Würfel durch Ermittlung des Gewichtes errechnet. Die Brandeigenschaften wurden gemäß EN ISO 11925-2 bestimmt. Die Viskosität wurde mittels eines Rotationsviskosimeters Viscolab LC1 bestimmt.

Aus den Ergebnissen in Tabelle 2 wird deutlich, dass bei Verwendung des erfindungsgemäßen rein aliphatischen Polyesterpolyols ein verbessertes Brandverhalten beobachtet wird, was nicht zu erwarten war.

Aus den Ergebnissen in Tabelle 3 wird deutlich, dass sich unter Verwendung des erfindungsgemäßen aliphatischen Polyesterpolyols HFC getriebene Sprühschäume niedriger Rohdichte und hoher Reaktivität erhalten lassen. Die niedrige Viskosität der Formulierung erlaubt die Verarbeitung auf handelsüblichen pneumatischen Hochdrucksprühanlagen, was bei Einsatz der hochviskosen, aromatisches Polyesterpolyol enthaltenden Formulierung nicht möglich ist.

## Patentansprüche

1. PUR-/PIR-Hartschaumstoffe für Laminate, erhältlich durch Umsetzung einer organischen Polyisocyanatkomponente mit einer Verbindung mit gegenüber Isocyanatgruppen reaktive Wasserstoffatome enthaltenden Polyolkomponente bei einem Index von 100 bis 400 in Gegenwart geeigneter Hilfs- und Zusatzstoffe sowie Fluorkohlenwasserstoffe und/oder Pentan als Treibmittel und Wasser als Co-Treibmittel, wobei das Treibmittel in Mengen von 1,0 bis 30,0 Gew.-% bezogen auf 100 Gew.-% Polyolkomponente und das Co-Treibmittel in Mengen von 0,5 bis 4 Gew.-%, bezogen auf die Gesamtmenge an Verbindungen mit gegenüber Isocyanatgruppen reaktiven Wasserstoffatome in der Polyolkomponente, eingesetzt wird, wobei die Polyolkomponente mindestens ein aliphatisches Polyesterpolyol enthält, das neben von Adipinsäure abgeleiteten Baueinheiten auch solche Baueinheiten enthält, die von Glutarsäure, Bernsteinsäure und/oder Sebacinsäure abgeleitet sind und eine OH-Zahl von 100 bis 300 mg KOH/g und keine aromatische Einheiten aufweist.

2. PUR-/PIR-Hartschaumstoffe gemäß Anspruch 1, wobei der Index im Bereich von 180 bis 400 liegt.

3. PUR-/PIR-Hartschaumstoffe, erhältlich durch Umsetzung einer organischen Polyisocyanatkomponente mit einer Verbindung mit gegenüber Isocyanatgruppen reaktive Wasserstoffatome enthaltenden Polyolkomponente bei einem Index von 100 bis 400 in Gegenwart geeigneter Hilfs- und Zusatzstoffe sowie Fluorkohlenwasserstoffe und/oder Pentan als Treibmittel und Wasser als Co-Treibmittel nach dem Sprühverfahren, wobei das Treibmittel in Mengen von 1,0 bis 15,0 Gew.-% bezogen auf 100 Gew.-% Polyolkomponente und das Co-Treibmittel in Mengen von 1,5 bis 4 Gew.-%, bezogen auf die Gesamtmenge an Verbindungen mit gegenüber Isocyanatgruppen reaktiven Wasserstoffatome in der Polyolkomponente, eingesetzt wird, wobei die Polyolkomponente mindestens ein aliphatisches Polyesterpolyol enthält, das neben von Adipinsäure abgeleiteten Baueinheiten auch solche Baueinheiten enthält, die von Glutarsäure, Bernsteinsäure und/oder Sebacinsäure abgeleitet sind und eine OH-Zahl von 100 bis 300 mg KOH/g und keine aromatische Einheiten aufweist.

4. PUR-/PIR-Hartschaumstoffe gemäß Anspruch 3, wobei der Index im Bereich von 180 bis 400 liegt.

5. Verfahren zur Herstellung von PUR-/PIR-Hartschaumstoffen nach einem der Ansprüche 3 oder 4 bei denen eine organische Polyisocyanatkomponente mit einer Verbindung mit gegenüber Isocyanatgruppen reaktiven Wasserstoffatomen enthaltenden Polyolkomponente bei einem Index von 100 bis 400 in Gegenwart geeigneter Hilfs- und Zusatzstoffe sowie Fluorkohlenwasserstoffe und/oder Pentan als Treibmittel und Wasser als Co-Treibmittel, wobei das Treibmittel in Mengen von 1,0 bis 15,0 Gew.-% bezogen auf 100 Gew.-% Polyolkomponente und das Co-Treibmittel in Mengen von 1,5 bis 4 Gew.-% bezogen auf die Gesamtmenge an Verbindungen mit gegenüber Isocyanatgruppen reaktiven Wasserstoffatome in der Polyolkomponente nach dem Sprühverfahren versprüht wird, wobei die Polyolkomponente mindestens ein aliphatisches Polyesterpolyol enthält, das neben von Adipinsäure abgeleiteten Baueinheiten auch solche Baueinheiten enthält, die von Glutarsäure, Bernsteinsäure und/oder Sebacinsäure abgeleitet sind und eine OH-Zahl von 100 bis 300 mg KOH/g und keine aromatischen Einheiten aufweisen.

6. Laminat, enthaltend PUR-/PIR-Hartschaumstoffe gemäß Anspruch 2.

## Claims

1. Rigid PUR/PIR foams for laminates obtainable by reacting an organic polyisocyanate component with a polyol component comprising compound having isocyanate-reactive hydrogen atoms at an index of 100 to 400 in the presence of suitable auxiliary and added-substance materials and also hydrofluorocarbons and/or pentane as blowing agent and water as co-blowing agent, wherein the blowing agent is employed in amounts of 1.0 to 30.0 wt% based on 100 wt% polyol component and the co-blowing agent is employed in amounts of 0.5 to 4 wt%, based on the entirety of compounds having isocyanate-reactive hydrogen atoms in the polyol component, wherein the polyol component comprises at least one aliphatic polyester polyol which in addition to structural units derived from adipic acid further comprises structural units derived from glutaric acid, succinic acid and/or sebacic acid and has an OH number of 100 to 300 mg KOH/g and no aromatic units.

2. Rigid PUR/PIR foams according to Claim 1, wherein the index is in the range from 180 to 400.

3. Rigid PUR/PIR foams obtainable by reacting an organic polyisocyanate component with a polyol component comprising compound having isocyanate-reactive hydrogen atoms at an index of 100 to 400 in the presence of suitable auxiliary and added-substance materials and also hydrofluorocarbons and/or pentane as blowing agent and water as co-blowing agent, by the spraying process, wherein the blowing agent is employed in amounts of 1.0 to 15.0 wt% based on 100 wt% polyol component and the co-blowing agent is employed in amounts of 1.5 to 4 wt%, based on the entirety of compounds having isocyanate-reactive hydrogen atoms in the polyol component, wherein the polyol component comprises at least one aliphatic polyester polyol which in addition to structural units derived from adipic acid further comprises structural units derived from glutaric acid, succinic acid and/or sebacic acid and has an OH number of 100 to 300 mg KOH/g and no aromatic units.

4. Rigid PUR/PIR foams according to Claim 3, wherein the index is in the range from 180 to 400.

5. Processes for producing rigid PUR/PIR foams according to either of Claims 3 and 4, which each comprise spraying an organic polyisocyanate component with a polyol component comprising compound having isocyanate-reactive hydrogen atoms at an index of 100 to 400 in the presence of suitable auxiliary and added-substance materials and also hydrofluorocarbons and/or pentane as blowing agent and water as co-blowing agent, wherein the blowing agent is employed in amounts of 1.0 to 15.0 wt% based on 100 wt% polyol component and the co-blowing agent is employed in amounts of 1.5 to 4 wt%, based on the entirety of compounds having isocyanate-reactive hydrogen atoms in the polyol component, by the spraying process, wherein the polyol component comprises at least one aliphatic polyester polyol which in addition to structural units derived from adipic acid further comprises structural units which are derived from glutaric acid, succinic acid and/or sebacic acid and have an OH number of 100 to 300 mg KOH/g and no aromatic units.

6. Laminate comprising rigid PUR/PIR foams according to Claim 2.

## Revendications

1. Mousses dures de PUR/PIR pour les stratifiés, pouvant être obtenues par mise en réaction d'un composant polyisocyanate organique avec un composant polyol contenant un composé contenant des atomes d'hydrogène réactifs avec les groupes isocyanate à un indice de 100 à 400 en présence d'adjuvants et d'additifs appropriés, ainsi que d'hydrocarbures fluorés et/ou de pentane en tant qu'agent gonflant et d'eau en tant que co-agent gonflant, l'agent gonflant étant utilisé en quantités de 1,0 à 30,0 % en poids par rapport à 100 % en poids de composant polyol et le co-agent gonflant en quantités de 0,5 à 4 % en poids, par rapport à la quantité totale de composés contenant des atomes d'hydrogène réactifs avec les groupes isocyanate dans le composant polyol, le composant polyol contenant au moins un polyester-polyol aliphatique qui contient en plus d'unités structurales dérivées d'acide adipique également des unités structurales dérivées d'acide glutarique, d'acide succinique et/ou d'acide sébacique, et présente un indice OH de 100 à 300 mg KOH/g et ne comprend pas d'unités aromatiques.

2. Mousses dures de PUR/PIR selon la revendication 1, dans lesquelles l'indice se situe dans la plage allant de 180 à 400.

3. Mousses dures de PUR/PIR, pouvant être obtenues par mise en réaction d'un composant polyisocyanate organique avec un composant polyol contenant un composé contenant des atomes d'hydrogène réactifs avec les groupes isocyanate à un indice de 100 à 400 en présence d'adjuvants et d'additifs appropriés, ainsi que d'hydrocarbures fluorés et/ou de pentane en tant qu'agent gonflant et d'eau en tant que co-agent gonflant, par le procédé de pulvérisation, l'agent gonflant étant utilisé en quantités de 1,0 à 15,0 % en poids par rapport à 100 % en poids de composant polyol et le co-agent gonflant en quantités de 1,5 à 4 % en poids, par rapport à la quantité totale de composés contenant des atomes d'hydrogène réactifs avec les groupes isocyanate dans le composant polyol, le composant polyol contenant au moins un polyester-polyol aliphatique qui contient en plus d'unités structurales dérivées d'acide adipique également des unités structurales dérivées d'acide glutarique, d'acide succinique et/ou d'acide sébacique, et présente un indice OH de 100 à 300 mg KOH/g et ne comprend pas d'unités aromatiques.

4. Mousses dures de PUR/PIR selon la revendication 3, dans lesquelles l'indice se situe dans la plage allant de 180 à 400.

5. Procédé de fabrication de mousses dures de PUR/PIR selon l'une quelconque des revendications 3 ou 4, selon lequel un composant polyisocyanate organique est pulvérisé par le procédé de pulvérisation avec un composant polyol contenant un composé contenant des atomes d'hydrogène réactifs avec les groupes isocyanate à un indice de 100 à 400 en présence d'adjuvants et d'additifs appropriés, ainsi que d'hydrocarbures fluorés et/ou de pentane en tant qu'agent gonflant et d'eau en tant que co-agent gonflant, l'agent gonflant étant utilisé en quantités de 1,0 à 15,0 % en poids par rapport à 100 % en poids de composant polyol et le co-agent gonflant en quantités de 1,5 à 4 % en poids, par rapport à la quantité totale de composés contenant des atomes d'hydrogène réactifs avec les groupes isocyanate dans le composant polyol, le composant polyol contenant au moins un polyester-polyol aliphatique qui contient en plus d'unités structurales dérivées d'acide adipique également des unités structurales dérivées d'acide glutarique, d'acide succinique et/ou d'acide sébacique, et présente un indice OH de 100 à 300 mg KOH/g et ne comprend pas d'unités aromatiques.

6. Stratifié, contenant des mousses dures de PUR/PIR selon la revendication 2.
